(19) Europäisches Patentamt
European Patent Office
Office européen des brevets

(11) **EP 2 713 270 A1**

(12) **EUROPEAN PATENT APPLICATION**
published in accordance with Art. 153(4) EPC

(43) Date of publication:
**02.04.2014 Bulletin 2014/14**

(51) Int Cl.:
**G06F 9/50** (2006.01)

(21) Application number: **11878495.8**

(86) International application number:
**PCT/CN2011/084933**

(22) Date of filing: **29.12.2011**

(87) International publication number:
**WO 2013/097151 (04.07.2013 Gazette 2013/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **Huawei Technologies Co., Ltd
Shenzhen, Guangdong 518129 (CN)**

(72) Inventor: **GUO, Yan
Shenzhen
Guangdong 518129 (CN)**

(74) Representative: **Pfenning, Meinig & Partner GbR
Patent- und Rechtsanwälte
Theresienhöhe 13
80339 München (DE)**

(54) **RESOURCE SCHEDULING METHOD AND DEVICE**

(57)      Embodiments of the present invention disclose a resource scheduling method and apparatus. The method includes: determining at least one candidate destination physical machine and a physical machine on which a to-be-scheduled virtual machine is located; calculating a candidate communication cost required after the to-be-scheduled virtual machine is scheduled in a simulative way to each candidate destination physical machine; determining a destination physical machine among the at least one candidate destination physical machine according to the communication cost; and scheduling the to-be-scheduled virtual machine to the destination physical machine. In the solutions provided in the embodiments of the present invention, a destination physical machine is determined by calculating a candidate communication cost required after the to-be-scheduled virtual machine is scheduled in a simulative way to each candidate destination physical machine, and then resource scheduling is performed. In this way, the load of the entire network in the resource scheduling process is analyzed comprehensively so that the scheduled resources can meet more service requirements, which optimizes the scheduling effect.

FIG. 2

Description

TECHNICAL FIELD

The present invention relates to the field of cloud computing technologies, and in particular, to a resource scheduling method and device.

BACKGROUND

Currently, as a new IT technology, the cloud computing technology is developing more and more rapidly. As one of core technologies of cloud computing, resource scheduling attracts more and more attention of the academic circles.

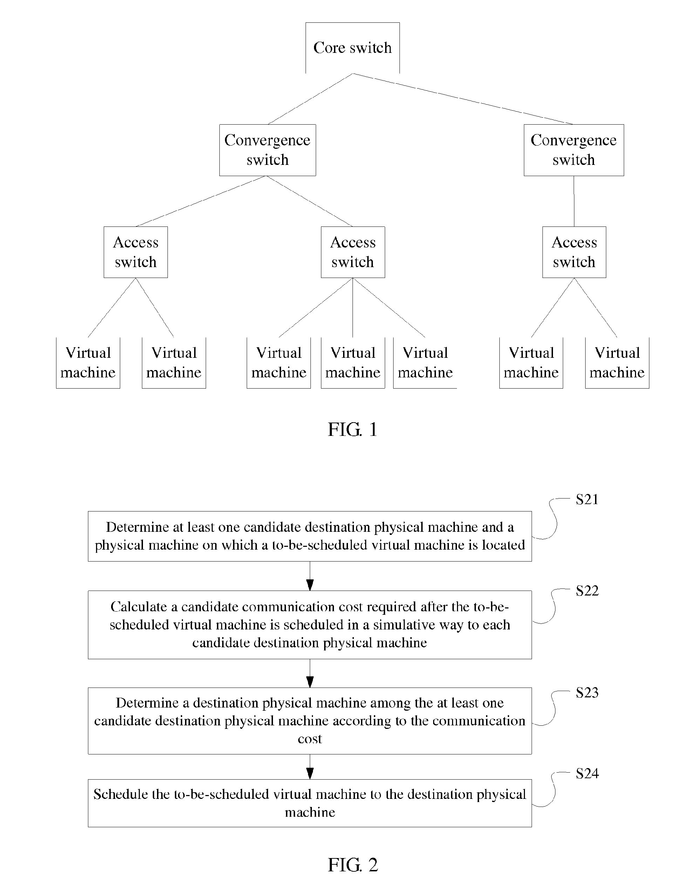

FIG. 1 shows a typical cloud computing data center networking mode, which includes a core layer, a convergence layer, and an access layer. A core layer switch is set on the core layer, a convergence switch is set on the convergence layer, and an access switch is set on the access layer. A physical machine is connected with the convergence switch through the access layer switch, and makes up a data center on the convergence switch to handle various cloud computing services.

With development of cloud computing, more and more types of services run on the cloud computing data center, and many of such services have high requirements for network bandwidths. To meet the network bandwidth requirements of services, virtual machine resources of the cloud computing data center generally need to be scheduled. In the prior art, the virtual machine is generally scheduled according to performance state indicators of the virtual machine, such as CPU usage or memory usage of the virtual machine. For example, when the CPU usage of a virtual machine is up to 80%, and the usage is so high that the virtual machine cannot bear new services, another virtual machine of lower CPU usage is selected to undertake new services, so that the fulfillment of the network bandwidth requirement or other resource requirements of the new services is ensured.

In the resource scheduling based on the foregoing solution, after the services are scheduled from a source virtual machine to a destination virtual machine, the problem of insufficient services of the source virtual machine is solved but the network load of the destination virtual machine is increased to some extent. Consequently, when the network load required by the scheduled service is heavy, the network load required on the destination virtual machine may exceed a threshold to trigger an alarm. Therefore, the existing resource scheduling method has a poor scheduling effect and the scheduling result is unsatisfactory.

SUMMARY

To solve the above technical problems, embodiments of the present invention provide a resource scheduling method and device to solve the problem that a resource scheduling method in the prior art has a poor scheduling effect. The technical solutions are as follows:

A resource scheduling method, including:

determining at least one candidate destination physical machine and a physical machine on which a to-be-scheduled virtual machine is located;

calculating a candidate communication cost required after the to-be-scheduled virtual machine is scheduled in a simulative way to each candidate destination physical machine;

determining a destination physical machine among the at least one candidate destination physical machine according to the candidate communication cost; and

scheduling the to-be-scheduled virtual machine to the destination physical machine.

A resource scheduling device, including:

a first determining module, configured to determine at least one candidate destination physical machine and a physical machine on which a to-be-scheduled virtual machine is located;

a communication cost calculating module, configured to calculate a candidate communication cost required after the to-be-scheduled virtual machine is scheduled in a simulative way to each candidate destination physical machine;

a second determining module, configured to determine a destination physical machine among the at least one candidate destination physical machine according to the communication cost; and

a scheduling module, configured to schedule the to-be-scheduled virtual machine to the destination physical machine.

In the solutions provided in the embodiments of the present invention, a destination physical machine is determined by calculating a candidate communication cost required after the to-be-scheduled virtual machine is scheduled in a simulative way to each candidate destination physical machine, and then resource scheduling is performed. In this way, the load of the entire network in the resource scheduling process is analyzed comprehensively so that the scheduled resources can meet more service requirements, which optimizes the scheduling effect.

BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 shows a typical cloud computing data center networking mode;
FIG. 2 is a flowchart of a resource scheduling method according to an embodiment of the present invention;
FIG. 3 is a flowchart of a method for determining at least one candidate destination physical machine and a physical machine on which a to-be-scheduled virtual machine is located according to an embodiment of the present invention;
FIG. 4 is a flowchart of another method for determining at least one candidate destination physical machine and a physical machine on which a to-be-scheduled virtual machine is located according to an embodiment of the present invention;
FIG. 5 is a flowchart of a method for obtaining predicted duration of a network load alarming according to an embodiment of the present invention;
FIG. 6 is a flowchart of another resource scheduling method according to an embodiment of the present invention;
FIG. 7 is a flowchart of determining whether an improvement coefficient meets a preset improvement condition according to an embodiment of the present invention;
FIG. 8 is a schematic structural diagram of a resource scheduling device according to an embodiment of the present invention;
FIG. 9 is a schematic structural diagram of a first determining module according to an embodiment of the present invention;
FIG. 10 is another schematic structural diagram of a first determining module according to an embodiment of the present invention; and
FIG. 11 is a schematic structural diagram of a second determining module according to an embodiment of the present invention.

**DESCRIPTION OF EMBODIMENTS**

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

To solve the problems that a resource scheduling method in the prior art can only enable a virtual machine to meet requirements of certain services, leading to a poor scheduling effect and an unsatisfactory scheduling result, an embodiment of the present invention discloses a resource scheduling method. The method is applicable to a cloud computing data center server. Specifically, a management system on the cloud computing data center server may execute the method. As shown in FIG. 2, the specific procedure of the method includes the following steps:

Step S21: Determine at least one candidate destination physical machine and a physical machine on which a to-be-scheduled virtual machine is located.

The resource scheduling method disclosed in this embodiment may be applied to any scenario in which resource scheduling is required, for example, when the management system of the cloud computing data center server detects an alarm in an alarm queue, or when a virtual machine is manually scheduled according to the running state of the current system.

Step S22: Calculate a candidate communication cost required after the to-be-scheduled virtual machine is scheduled in a simulative way to each candidate destination physical machine.

In this embodiment, only a communication cost of communication between the to-be-scheduled virtual machine and other virtual machines in the data center after it is assumed that the to-be-scheduled virtual machine is scheduled to the candidate destination physical machine needs to be calculated as a candidate communication cost, and the to-be-scheduled virtual machine does not need to be scheduled really, and therefore, overhead caused by scheduling do not increase.

The candidate communication cost in this embodiment is: a candidate internal communication cost of communication between the to-be-scheduled virtual machine and other virtual machines in the data center on which the to-be-scheduled virtual machine is located after the to-be-scheduled virtual machine is scheduled to the candidate destination physical machine; and/or, a candidate external communication cost of communication between the virtual machine and an external device outside the data center on which the to-be-scheduled virtual machine is located after the to-be-scheduled virtual machine is scheduled to the candidate destination physical machine.

When the access layer switch raises an alarm, the scheduling is performed in the same data center, and the internal communication cost is applied; and, when the convergence layer switch raises an alarm, the scheduling is performed across different data centers, and the external communication cost is applied. When the convergence layer switch raises an alarm, the virtual machine with the greatest current network load under the switch is selected as a to-be-scheduled virtual machine, and then a candidate external communication cost and a candidate internal communication cost after it is assumed that the virtual machine is scheduled to other data centers in communication with the virtual machine are calculated in a simulative way, and then an external communication cost improvement coefficient and an internal communication cost improvement coefficient are calculated. The scheduling is performed only when the external communication cost improvement coefficient and the internal communication cost improvement coefficient meet the scheduling condition at the same time, and the physical machine whose internal communication improvement coefficient and external communication improvement coefficient meet the scheduling condition at the same time is selected as the destination physical machine. Alternatively, when the convergence layer switch raises an alarm, the candidate external communication cost after it is assumed that the virtual machine is scheduled to other data centers in communication with the virtual machine respectively is calculated in a simulative way, and the scheduling is performed only when the external communication cost improvement coefficient meets the scheduling condition.

Step S23: Determine a destination physical machine among the at least one candidate destination physical machine according to the communication cost.

Step S24: Schedule the to-be-scheduled virtual machine to the destination physical machine.

In the resource scheduling method disclosed in this embodiment, the destination physical machine is determined by calculating a candidate communication cost required after the to-be-scheduled virtual machine is scheduled in a simulative way to each candidate destination physical machine, and then resource scheduling is performed. In this way, the load of the entire network in the resource scheduling process is analyzed comprehensively so that the scheduled resources can meet more service requirements, which optimizes the scheduling effect.

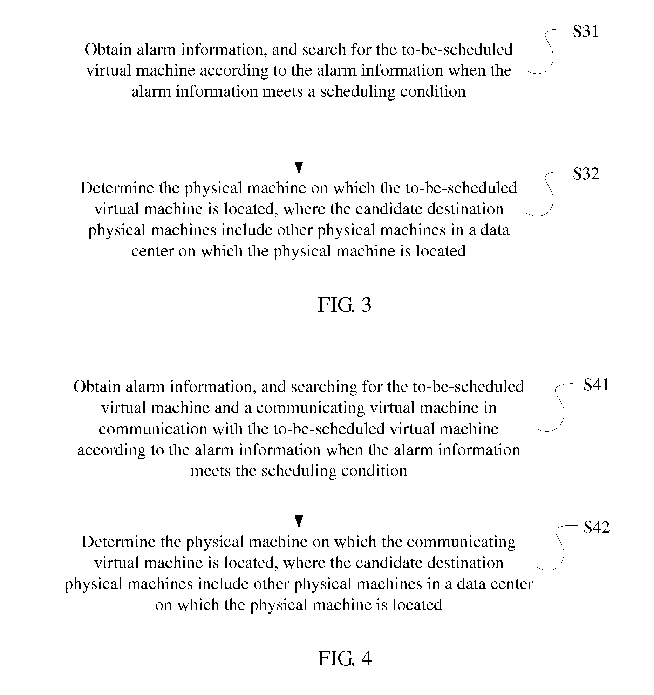

In the above embodiment, when the management system on the cloud computing data center server needs to perform resource scheduling after receiving alarm information generated when a network load exceeds the preset threshold, at least one candidate destination physical machine and the physical machine on which the to-be-scheduled virtual machine is located are determined, and, as shown in FIG. 3, the determining process includes the following steps:

Step S31: Obtain alarm information, and search for the to-be-scheduled virtual machine according to the alarm information when the alarm information meets a scheduling condition.

The alarm information in this embodiment includes an alarm type.

The alarm type includes at least one of the following:

a virtual machine alarm raised when an internal communication load value of the virtual machine exceeds an internal communication load threshold; or an access layer switch alarm raised when an egress bandwidth network load of an access layer switch exceeds a set egress bandwidth value; or, a convergence layer switch alarm raised when an egress bandwidth network load of a convergence layer switch exceeds a set egress bandwidth value.

When the alarm type is a virtual machine alarm, the virtual machine that raises the alarm is a to-be-scheduled virtual machine. When the alarm type is a switch alarm, the virtual machine with the greatest network load value is searched out among the virtual machines included in the alarming switch, and is determined as the to-be-scheduled virtual machine. Specifically, the process of determining the alarm type may be completed by the management system on the cloud computing data center server, or completed by another device independent of the management system on the cloud computing data center server.

In this case, if the alarm type is a virtual machine alarm or a switch alarm, the scheduling condition is met; if the alarm type is another alarm type, the scheduling condition is not met.

Step S32: Determine the physical machine on which the to-be-scheduled virtual machine is located, where the candidate destination physical machine(s) include other physical machines in a data center on which the physical machine is located.

In this embodiment, the candidate destination physical machine and the physical machine on which the to-be-scheduled virtual machine is located belong to the same data center. That is, no matter whether the to-be-scheduled virtual machine and the virtual machine in communication with the to-be-scheduled virtual machine are in the same data center, the resource scheduling is performed in the data center that includes the to-be-scheduled virtual machine in this embodiment, thereby preventing the network load from exceeding the preset threshold when the to-be-scheduled virtual machine communicates with the virtual machine.

Certainly, the candidate destination physical machine may also be in a different data center from the to-be-scheduled virtual machine. When the to-be-scheduled virtual machine is in a different data center from the virtual machine in communication with it, as shown in FIG. 4, the process of determining at least one candidate destination physical machine and the physical machine on which the to-be-scheduled virtual machine is located includes the following steps:

Step S41: Obtain alarm information, and search, according to the alarm information when the alarm information meets the scheduling condition, for the to-be-scheduled virtual machine and a communicating virtual machine in communication with the to-be-scheduled virtual machine.

Step S42: Determine the physical machine on which the communicating virtual machine is located, where the candidate destination physical machine(s) include other physical machines in a data center on which the physical machine is located.

In this embodiment, by scheduling the to-be-scheduled virtual machine to the data center on which the virtual machine is located in communication with the to-be-scheduled virtual machine, the cross-data-center communication between the to-be-scheduled virtual machine and the virtual machine in communication with the to-be-scheduled virtual machine is converted into communication within the data center, thereby reducing external communication costs and reducing the network load in the communication process.

Further, in this embodiment, the to-be-scheduled virtual machine is not limited to be scheduled in the data center on which the to-be-scheduled virtual machine is located, or scheduled to the data center on which the virtual machine is located in communication with the to-be-scheduled virtual machine, and it may also be scheduled to a physical machine in other data centers. All such practices are covered in the protection scope of the embodiment of the present invention so long as they can reduce the network load.

In the above embodiment, the alarm information further includes predicted duration of a network load alarming, and the alarm information meeting the scheduling condition further includes: current duration of the network load alarming being not less than a preset time. The alarm information meets the scheduling condition when the following two conditions are met: The alarm type is a virtual machine alarm or a switch alarm, and the current duration of the network load alarming is not less than a preset time.

This embodiment does not limit the alarm information and the manner of determining whether the alarm information meets the scheduling condition; the alarm information may include only the predicted duration of the network load alarming, and the alarm information meeting the scheduling condition may be determined by checking that the predicted duration of the network load alarming is not less than the preset time.

In this embodiment, the current duration refers to the duration from raising an alarm on the network load that generates the alarm to the current time, and the preset time may be determined according to the predicted duration of the network load alarming, and may be the predicted duration itself, or 50% of the predicted duration, or 60% of the predicted duration, or the like, and may be specifically set according to the actual network state.

In the present invention, for ease of calculation, a communication load matrix may be pre-established. Each data point in the communication load matrix is used to indicate the communication cost of communication between the to-be-scheduled virtual machine and each virtual machine, where the communication cost may be an external communication cost or an internal communication cost. For example, a communication load matrix corresponding to each data center is established, and the communication load matrix includes internal communication costs of communication between different virtual machines in the data center. If the number of virtual machines in the data center is n, the communication load matrix is an n*n matrix, the (i; j)th data point in the matrix represents an uplink network load of virtual machine i in relative to virtual machine j, where n is a positive integer, and i and j are positive integers not greater than n.

Because each data point in the communication load matrix is obtained by filtering IP packets of virtual machine network adapters and making statistics by using the destination IP address of the IP packet, the communication conditions of each virtual machine change after the communication environment changes. Therefore, the communication matrix needs to be updated. It is assumed that the update cycle in this embodiment is L.

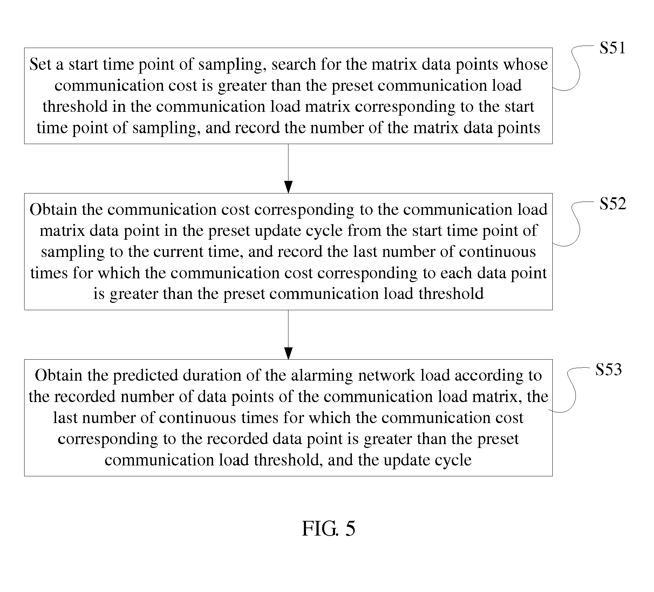

By using the communication load matrix, the process of obtaining predicted duration of a network load alarming according to the procedure shown in FIG. 5 includes the following steps:

Step S51: Set a start time point of sampling, search for matrix data points whose communication costs are greater than a preset communication load threshold in the communication load matrix corresponding to the start time point of sampling, and record the number of the matrix data points.

Therefore, the start time point of sampling in this embodiment is an integer multiple of L. That is, after the communication load matrix is updated, a determination is made about whether any data point whose communication cost is greater than the preset communication cost exists in the communication load matrix, that is, whether a communication process whose communication cost is greater than the preset communication cost exists; and, if yes, the number of data points whose communication costs are greater than the preset communication cost is recorded.

For example, a 3*3 communication matrix is as follows:

A1, A2, A3
B1, B2, B3
C1, C2, C3
where A1, A2, A3, B1, B2, B3, C1, C2, and C3 are data points in the communication load matrix. It is assumed that the matrix update cycle is 1 minute. Using a half hour as a prediction cycle, the start time point of sampling is set to 7:30 (the system needs to buffer the data of the communication matrix in the entire prediction cycle).

In the calculation, first, the communication load matrix data at 7:30 is selected for viewing. Assuming that the preset communication load threshold is 500 M, if the obtained values of B2 and B3 are greater than the threshold 500 M, the two matrix data points (B2, B3) are used as a basis of subsequent detection, and the number being 2 is recorded.

Step S52: Obtain the communication cost corresponding to the communication load matrix data point according to the preset update cycle from the start time point of sampling to the current time, and record the last number of times for which the communication cost corresponding to each data point is continuously greater than the preset communication load threshold.

The communication costs corresponding to the matrix data points (B2, B3) in the communication load matrix in each update cycle are viewed from 7:30 to 8:00 continuously, conditions where communication costs of the two points when updated at each update time point are greater than the preset communication load threshold are recorded, the number of the times of being continuously greater than the preset communication load threshold is counted, and the last number of the times of being continuously greater than the preset communication load threshold is recorded. For example, taking the data point B2 as an example, assuming that the communication costs obtained in the first 10 updates are greater than the preset communication load threshold during 30 updates performed from 7:30 to 8:00, the communication costs obtained in the 5 updates in the middle are not greater than the preset communication load threshold, and the communication costs obtained in the last 15 updates are greater than the preset communication load threshold, then 15 is recorded as the last number of the times of the communication cost of the data point B2 being continuously greater than the preset communication load threshold, and then predicted duration is calculated according to the number of times.

Step S53: Obtain the predicted duration of the network load alarming according to the recorded number of data points of the communication load matrix, the recorded last number of the times for which the communication cost corresponding to the recorded data point is continuously greater than the preset communication load threshold, and the update cycle.

Specifically,

$$T = \frac{\sum_{i=0}^{x-1} m_i L}{x},$$

where $m_i$ is the last number of times for which the communication cost of the $i^{th}$ data point is continuously greater than the preset communication load threshold; and therefore, according to the above formula, the predicted duration T of the network load alarming can be obtained.

Assuming that the current duration of the network load alarming is t and the preset time is 0.5T, t may be compared with 0.5T to determine whether the network load alarming is a persistently large network load or a transient peak. If t >= 0.5T, which indicates that the network load alarming is a persistently large network load and the alarm information meets the scheduling condition, resources need to be scheduled; and, if t < 0.5T, which indicates that the network load alarming is a transient peak and will not persist long, no resource scheduling is required.

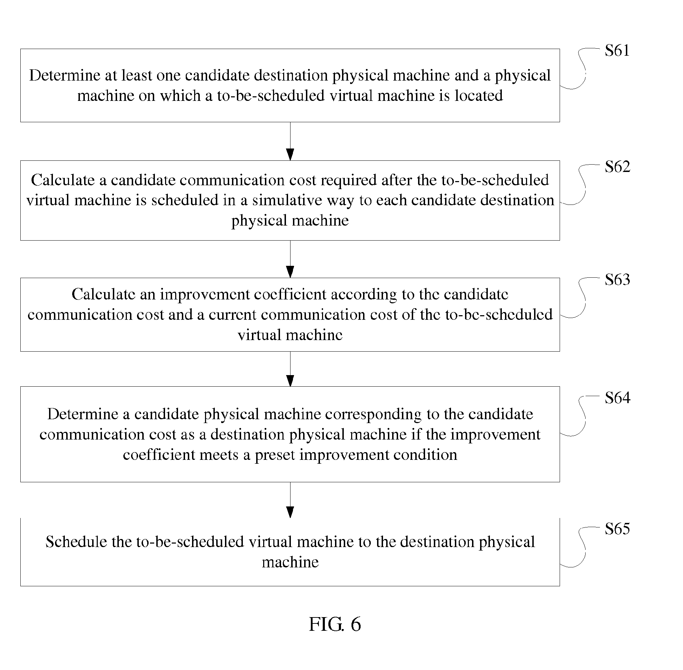

A process of another resource scheduling method disclosed in an embodiment of the present invention is shown in FIG. 6. This process is applicable to a scenario in which a to-be-scheduled virtual machine and a virtual machine in communication with the to-be-scheduled virtual machine are in the same data center, where the candidate communication cost is an internal communication cost. The specific process includes the following steps:

Step S61: Determine at least one candidate destination physical machine and a physical machine on which a to-be-scheduled virtual machine is located.

Step S62: Calculate a candidate communication cost required after the to-be-scheduled virtual machine is scheduled in a simulative way to each candidate destination physical machine.

In this embodiment, when there are multiple candidate communication costs, the calculated multiple candidate communication costs may be stored in a preset array arrCn(n).

Step S63: Calculate an improvement coefficient according to the candidate communication cost and a current communication cost of the to-be-scheduled virtual machine.

The current internal communication cost is calculated according to the communication load matrix. Assuming that the to-be-scheduled virtual machine is i and the virtual machine in communication with it is j, the current internal communication cost Cn of the virtual machine is:

$$Cn = VCM[i, j]*ai + VCM[j, i]*aj$$

where ai and aj are communication cost coefficients. Generally, ai = aj = the number of switches traversed by communication between virtual machine i and virtual machine j minus 1.

Step S64: Determine a candidate physical machine corresponding to the candidate communication cost as a destination physical machine when the improvement coefficient meets a preset improvement condition.

In this embodiment, the improvement coefficient meeting the preset improvement condition is: The improvement coefficient is not greater than a preset improvement coefficient. The improvement coefficient in this embodiment may be a ratio of the candidate communication cost to the current communication cost. That is, the improvement coefficient indicates whether the communication cost of the to-be-scheduled virtual machine increases or decreases compared with the current communication cost after the to-be-scheduled virtual machine is scheduled to the physical machine corresponding to the candidate communication cost, and, if it increases, what is the increase scale, if it decreases, what is the decrease scale. If the improvement coefficient is smaller, the communication cost decreases to a larger extent, and the network load used in communication is lighter. In this embodiment, the preset improvement coefficient is 0.6, that is, the network load used in the communication process can be reduced only if the candidate communication cost decreases to 60% of the current communication cost or even decreases more, so that the network load of the virtual machine is lower than the preset threshold. This embodiment does not limit the value of the preset improvement coefficient, and the improvement coefficient may be set according to actual conditions.

Step S65: Schedule the to-be-scheduled virtual machine to the destination physical machine.

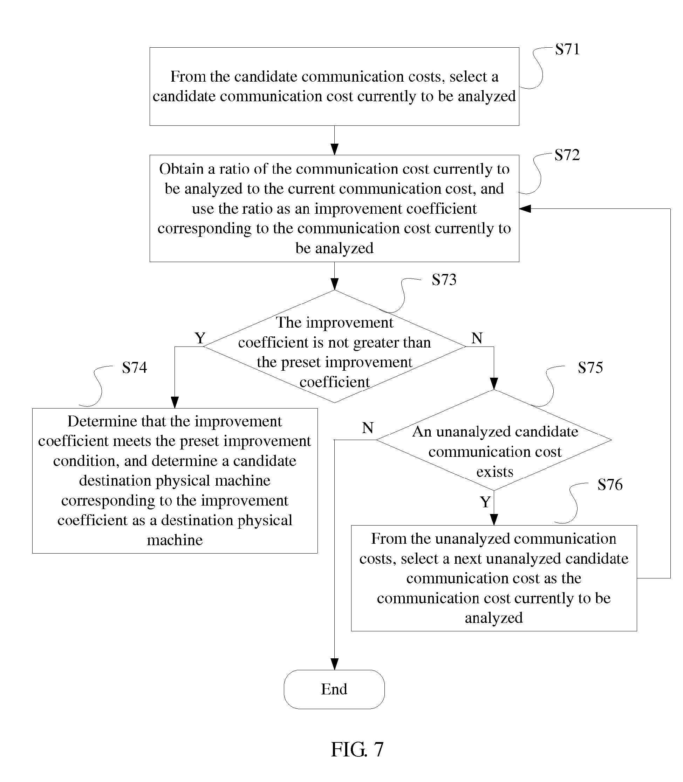

In the above process, because there are multiple candidate communication costs, the steps shown in FIG. 7 may be performed to determine whether the improvement coefficient meets the preset improvement condition, and determine the destination physical machine:

Step S71: From the candidate communication costs, select a candidate communication cost currently to be analyzed.

Step S72: Obtain a ratio of the communication cost currently to be analyzed to the current communication cost, and use the ratio as an improvement coefficient corresponding to the communication cost currently to be analyzed.

The improvement coefficient in this embodiment is $\alpha$:

$$\alpha = \frac{arrCn[i]}{Cn}.$$

Step S73: Determine whether the improvement coefficient is not greater than the preset improvement coefficient, and, if yes, perform step S74, if not, perform step S75.

Step S74: Determine that the improvement coefficient meets the preset improvement condition, and determine a candidate destination physical machine corresponding to the improvement coefficient as a destination physical machine.

Step S75: Determine whether an unanalyzed candidate communication cost exists in the candidate communication costs, and, if yes, perform step S76, if not, end the process.

Step S76: From the unanalyzed internal communication costs, select a next unanalyzed candidate communication cost as the communication cost currently to be analyzed, and return to step S72.

In this embodiment, before the to-be-scheduled virtual machine is scheduled to the destination physical machine, the physical resources of destination physical machine may be analyzed to determine whether the physical resources can ensure fulfillment of the resource requirements of the scheduled virtual machine. For example, if the memory required for communication by the to-be-scheduled virtual machine is 5 M and the remaining memory of the destination physical machine is less than 5 M, it indicates that normal communication will fail after the to-be-scheduled virtual machine is scheduled. Alternatively, the CPU occupancy required for communication by the to-be-scheduled virtual machine is 20% and the current CPU memory occupancy of the destination physical machine is 90%. When any one of the foregoing conditions or a combination of several of the foregoing conditions occurs, the currently determined destination physical machine may be discarded, and the foregoing steps may be repeated to determine a new physical machine. In this way, the scheduling success is ensured and the reliability of the method is improved.

In this embodiment, multiple candidate communication costs stored in the array may be sorted in ascending order, and then selected sequentially, thereby ensuring that the destination physical machine can be found quickly. In addition, when the improvement coefficient corresponding to a candidate communication cost is already not less than the preset improvement coefficient, it is not necessary to determine other remaining candidate communication costs, and it may be directly determined that all are not less than the preset improvement coefficient, which reduces the number of times of calculation and power consumption.

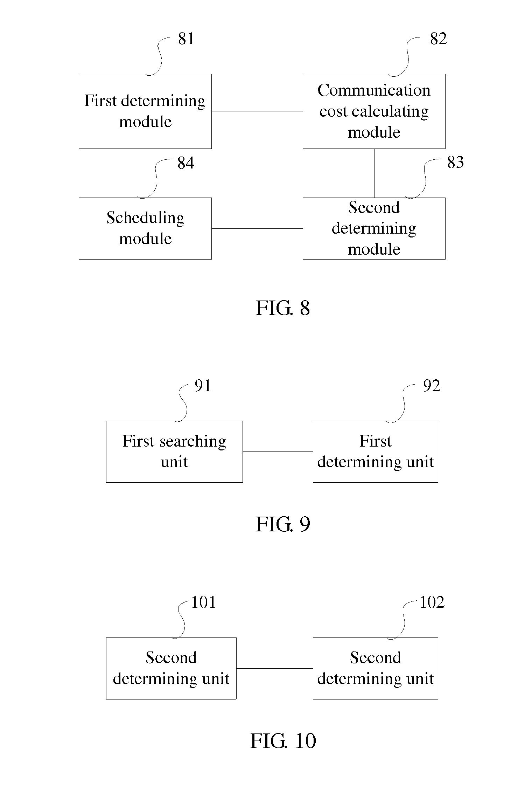

In addition, the present invention discloses a resource scheduling device. As shown in FIG. 8, the device includes:

> a first determining module 81, configured to determine at least one candidate destination physical machine and a physical machine on which a to-be-scheduled virtual machine is located;
> a communication cost calculating module 82, configured to calculate a candidate communication cost required after the to-be-scheduled virtual machine is scheduled in a simulative way to each candidate destination physical machine;
> a second determining module 83, configured to determine a destination physical machine among the at least one candidate destination physical machine according to the candidate communication cost; and
> a scheduling module 84, configured to schedule the to-be-scheduled virtual machine to the destination physical machine.

For the working process of the resource scheduling device disclosed in this embodiment, reference may be made to the method embodiment corresponding to FIG. 2, and no more details are given here any further.

In the resource scheduling device disclosed in this embodiment, the destination physical machine is determined by calculating a candidate communication cost required after the to-be-scheduled virtual machine is scheduled in a simulative way to each candidate destination physical machine, and then resource scheduling is performed. In this way, the load of the entire network in the resource scheduling process is analyzed comprehensively so that the scheduled resources can meet more service requirements, which optimizes the scheduling effect.

The candidate communication cost in the above embodiment includes at least one of the following:

a candidate internal communication cost of communication between the to-be-scheduled virtual machine and other virtual machines in a data center on which the to-be-scheduled virtual machine is located after the to-be-scheduled virtual machine is scheduled to the candidate destination physical machine; or

a candidate external communication cost of communication between the virtual machine and an external device outside the data center on which the to-be-scheduled virtual machine is located after the to-be-scheduled virtual machine is scheduled to the candidate destination physical machine.

Further, in a case where due to occurrence of alarm information, resource scheduling needs to be performed in the data center on which the to-be-scheduled virtual machine is located to reduce the network load of communication between the to-be-scheduled virtual machine and the virtual machine in communication with it and prevent the network load from exceeding the preset threshold, as shown in FIG. 9, the first determining module includes:

a first searching unit 91, configured to obtain alarm information, and search for the to-be-scheduled virtual machine according to the alarm information when the alarm information meets a scheduling condition; and

a first determining unit 92, configured to determine the physical machine on which the to-be-scheduled virtual machine is located, where the candidate destination physical machine(s) include other physical machines in a data center on which the physical machine is located.

Further, when the to-be-scheduled virtual machine and the virtual machine in communication with it are not in the same data center, as shown in FIG. 10, the first determining module includes:

a second determining unit 101, configured to obtain alarm information, and search, according to the alarm information when the alarm information meets the scheduling condition, for the to-be-scheduled virtual machine and a communicating virtual machine in communication with the to-be-scheduled virtual machine; and

a second determining unit 102, configured to determine a physical machine on which the communicating virtual machine is located, where the candidate destination physical machine(s) include other physical machines in a data center on which the physical machine is located.

This embodiment does not limit that the structure of the first determining module varies with the current scheduling conditions. Instead, the foregoing structure may be set in the same storage medium capable of analysis and processing, and different processing modes may be selected according to different conditions.

In this embodiment, the alarm information includes an alarm type, and the alarm type includes at least one of the following:

a virtual machine alarm raised when an internal communication load value of the virtual machine exceeds an internal communication load threshold; or

a switch alarm raised when an egress bandwidth network load of an access layer switch exceeds a set egress bandwidth value; or, an access layer switch alarm raised when an egress bandwidth network load of a convergence layer switch exceeds a set egress bandwidth value.

Further, the alarm information further includes predicted duration of the network load alarming. If the current duration of the network load alarming is not less than the preset time, it is determined that the alarm information meets the scheduling condition.

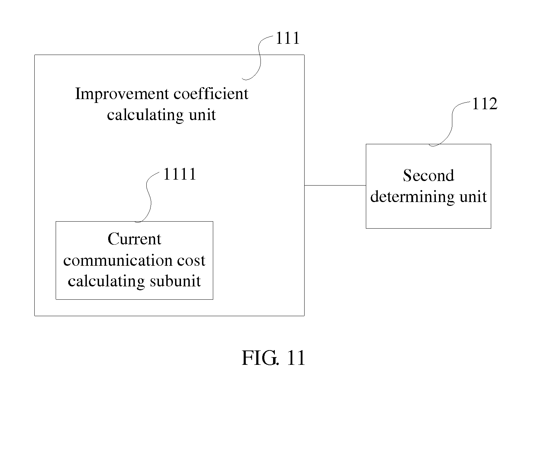

Further, as shown in FIG. 11, the second determining module in this embodiment includes:

an improvement coefficient calculating unit 111, configured to calculate an improvement coefficient according to the candidate communication cost and a current communication cost of the to-be-scheduled virtual machine; and

a destination physical machine determining unit 112, configured to determine a candidate physical machine corresponding to the candidate communication cost as a destination physical machine when the improvement coefficient meets a preset improvement condition.

The improvement coefficient calculating unit 111 includes:

a current communication cost calculating subunit 1111, configured to obtain the current communication cost of the to-be-scheduled virtual machine according to a communication load matrix, where the communication load matrix includes communication costs of communication between the to-be-scheduled virtual machine and each virtual machine.

What is disclosed in this embodiment is only an exemplary embodiment of the resource scheduling device. For the detailed implementation manner of the device, reference may be made to the resource scheduling method embodiment, and no more details are given here any further.

A person of ordinary skill in the art may understand that all or a part of the progresses in the methods of the foregoing embodiments may be implemented by a computer program instructing relevant hardware. The program may be stored in a computer readable storage medium. When the program runs, the processes of the methods in the foregoing embodiments are performed. The storage medium may be a magnetic disk, an optical disc, a read-only memory (Read-Only Memory, ROM), or a random access memory (Random Access Memory, RAM) or the like.

The apparatus or system embodiment is basically similar to the method embodiment, and therefore, for a related part, refer to the corresponding part in the description of the method embodiment. The apparatus or system embodiments described above are merely exemplary, where, the units described as separate parts may or may not be physically separate, and parts displayed as units may or may not be physical units, may be located in one position, or may be distributed on a plurality of network elements. Part of or all of the modules may be selected according to actual needs to achieve the objectives of the solutions of the embodiments. A person of ordinary skill in the art may understand and implement the embodiments without making creative efforts.

In the embodiments provided in the present invention, understandably, the disclosed system, apparatus, and method may be implemented in other manners without departing from the spirit and scope of this application. The candidate embodiments are merely exemplary and rather than limitation, and the specific contents described herein shall not limit the objectives of this application. For example, the division of units or subunits is merely logical function division, and, may be other division in actual implementation. For example, a plurality of units or subunits may be combined together. In addition, multiple units or components may be combined or integrated into another system, or some features may be ignored or not performed.

In addition, the system, apparatus and method described herein, and schematic diagrams of different embodiments can be combined or integrated with other systems, modules, technologies, or methods without departing from the scope of this application. In addition, the displayed or discussed mutual couplings or direct couplings or communication connections may be implemented through some interfaces. The indirect couplings or communication connections between the apparatuses or units may be implemented in electrical, mechanical, or other forms.

The foregoing descriptions are merely specific embodiments of the present invention. It should be noted that a person of ordinary skill in the art may still make improvements and modifications without departing from the principle of the present invention, and these improvements and modifications should be construed as falling within the protection scope of the present invention.

**Claims**

1. A resource scheduling method, comprising:

    determining at least one candidate destination physical machine and a physical machine on which a to-be-scheduled virtual machine is located;
    calculating a candidate communication cost required after the to-be-scheduled virtual machine is scheduled in a simulative way to each candidate destination physical machine;
    determining a destination physical machine among the at least one candidate destination physical machine according to the candidate communication cost; and
    scheduling the to-be-scheduled virtual machine to the destination physical machine.

2. The method according to claim 1, wherein the determining at least one candidate destination physical machine and a physical machine on which a to-be-scheduled virtual machine is located comprises:

    obtaining alarm information, and searching for the to-be-scheduled virtual machine according to the alarm information when the alarm information meets a scheduling condition; and
    determining the physical machine on which the to-be-scheduled virtual machine is located, wherein the candidate destination physical machine(s) comprise other physical machines in a data center on which the physical machine is located;
    or, obtaining alarm information, and searching, according to the alarm information when the alarm information meets the scheduling condition, for the to-be-scheduled virtual machine and a communicating virtual machine in communication with the to-be-scheduled virtual machine; and
    determining a physical machine on which the communicating virtual machine is located, wherein the candidate destination physical machine(s) comprise other physical machines in a data center on which the physical machine is located.

3. The method according to claim 1 or 2, wherein the candidate communication cost comprises at least one of the following:

a candidate internal communication cost of communication between the to-be-scheduled virtual machine and other virtual machines in the data center on which the to-be-scheduled virtual machine is located after the to-be-scheduled virtual machine is scheduled to the candidate destination physical machine;
or, a candidate external communication cost of communication between the virtual machine and an external device outside the data center on which the to-be-scheduled virtual machine is located after the to-be-scheduled virtual machine is scheduled to the candidate destination physical machine.

4. The method according to claim 2, wherein the alarm information comprises an alarm type.

5. The method according to claim 4, wherein the alarm type comprises at least one of the following:

a virtual machine alarm raised when an internal communication load value of the virtual machine exceeds an internal communication load threshold;
or, an access layer switch alarm raised when an egress bandwidth network load of an access layer switch exceeds a set egress bandwidth value;
or, an access layer switch alarm raised when an egress bandwidth network load of a convergence layer switch exceeds a set egress bandwidth value.

6. The method according to claim 4 or 5, wherein the alarm information further comprises predicted duration of a network load alarming, and the alarm information meeting the scheduling condition comprises: current duration of the network load alarming being not less than a preset time.

7. The method according to any one of claims 1 to 6, wherein the determining a destination physical machine among the at least one candidate destination physical machine according to the candidate communication cost comprises:

calculating an improvement coefficient according to the candidate communication cost and a current communication cost of the to-be-scheduled virtual machine; and
determining a candidate physical machine corresponding to the candidate communication cost as a destination physical machine when the improvement coefficient meets a preset improvement condition.

8. The method according to claim 7, wherein the current communication cost of the to-be-scheduled virtual machine is obtained according to a communication load matrix, and the communication load matrix comprises communication costs of communication between the to-be-scheduled virtual machine and each virtual machine.

9. A resource scheduling device, comprising:

a first determining module, configured to determine at least one candidate destination physical machine and a physical machine on which a to-be-scheduled virtual machine is located;
a communication cost calculating module, configured to calculate a candidate communication cost required after the to-be-scheduled virtual machine is scheduled in a simulative way to each candidate destination physical machine;
a second determining module, configured to determine a destination physical machine among the at least one candidate destination physical machine according to the candidate communication cost; and
a scheduling module, configured to schedule the to-be-scheduled virtual machine to the destination physical machine.

10. The device according to claim 9, wherein the first determining module comprises:

a first searching unit, configured to obtain alarm information, and search for the to-be-scheduled virtual machine according to the alarm information when the alarm information meets a scheduling condition; and
a first determining unit, configured to determine the physical machine on which the to-be-scheduled virtual machine is located, wherein the candidate destination physical machine(s) comprise other physical machines in a data center on which the physical machine is located.

11. The device according to claim 9, wherein the first determining module comprises:

a second searching unit, configured to obtain alarm information, and search, according to the alarm information when the alarm information meets the scheduling condition, for the to-be-scheduled virtual machine and a communicating virtual machine in communication with the to-be-scheduled virtual machine; and
a second determining unit, configured to determine a physical machine on which the communicating virtual machine is located, wherein the candidate destination physical machine(s) comprise other physical machines in a data center on which the physical machine is located.

**12.** The device according to claim 10 or 11, wherein the second determining module comprises:

an improvement coefficient calculating unit, configured to calculate an improvement coefficient according to the candidate communication cost and a current communication cost of the to-be-scheduled virtual machine; and
a destination physical machine determining unit, configured to determine a candidate physical machine corresponding to the candidate communication cost as a destination physical machine when the improvement coefficient meets a preset improvement condition.

**13.** The device according to claim 12, wherein the improvement coefficient calculating unit comprises:

a current communication cost calculating subunit, configured to obtain the current communication cost of the to-be-scheduled virtual machine according to a communication load matrix, wherein the communication load matrix comprises communication costs of communication between the to-be-scheduled virtual machine and each virtual machine.

**14.** The device according to any one of claims 9 to 13, wherein the candidate communication cost comprises at least one of the following:

a candidate internal communication cost of communication between the to-be-scheduled virtual machine and other virtual machines in the data center on which the to-be-scheduled virtual machine is located after the to-be-scheduled virtual machine is scheduled to the candidate destination physical machine; and
or, a candidate external communication cost of communication between the virtual machine and an external device outside the data center on which the to-be-scheduled virtual machine is located after the to-be-scheduled virtual machine is scheduled to the candidate destination physical machine.

```
                          ┌──────────────┐
                          │  Core switch │
                          └──────────────┘
                      ╱                      ╲
          ┌──────────────┐              ┌──────────────┐
          │ Convergence  │              │ Convergence  │
          │   switch     │              │   switch     │
          └──────────────┘              └──────────────┘
          ╱            ╲                       │
   ┌─────────┐    ┌─────────┐             ┌─────────┐
   │ Access  │    │ Access  │             │ Access  │
   │ switch  │    │ switch  │             │ switch  │
   └─────────┘    └─────────┘             └─────────┘
    ╱     ╲        ╱    │    ╲              ╱      ╲
┌───────┐┌───────┐┌───────┐┌───────┐┌───────┐  ┌───────┐┌───────┐
│Virtual││Virtual││Virtual││Virtual││Virtual│  │Virtual││Virtual│
│machine││machine││machine││machine││machine│  │machine││machine│
└───────┘└───────┘└───────┘└───────┘└───────┘  └───────┘└───────┘
```

FIG. 1

S21

Determine at least one candidate destination physical machine and a physical machine on which a to-be-scheduled virtual machine is located

S22

Calculate a candidate communication cost required after the to-be-scheduled virtual machine is scheduled in a simulative way to each candidate destination physical machine

S23

Determine a destination physical machine among the at least one candidate destination physical machine according to the communication cost

S24

Schedule the to-be-scheduled virtual machine to the destination physical machine

FIG. 2

Obtain alarm information, and search for the to-be-scheduled virtual machine according to the alarm information when the alarm information meets a scheduling condition ⟩— S31

Determine the physical machine on which the to-be-scheduled virtual machine is located, where the candidate destination physical machines include other physical machines in a data center on which the physical machine is located ⟩— S32

FIG. 3

Obtain alarm information, and searching for the to-be-scheduled virtual machine and a communicating virtual machine in communication with the to-be-scheduled virtual machine according to the alarm information when the alarm information meets the scheduling condition ⟩— S41

Determine the physical machine on which the communicating virtual machine is located, where the candidate destination physical machines include other physical machines in a data center on which the physical machine is located ⟩— S42

FIG. 4

Set a start time point of sampling, search for the matrix data points whose communication cost is greater than the preset communication load threshold in the communication load matrix corresponding to the start time point of sampling, and record the number of the matrix data points

S51

Obtain the communication cost corresponding to the communication load matrix data point in the preset update cycle from the start time point of sampling to the current time, and record the last number of continuous times for which the communication cost corresponding to each data point is greater than the preset communication load threshold

S52

Obtain the predicted duration of the alarming network load according to the recorded number of data points of the communication load matrix, the last number of continuous times for which the communication cost corresponding to the recorded data point is greater than the preset communication load threshold, and the update cycle

S53

FIG. 5

Determine at least one candidate destination physical machine and a physical machine on which a to-be-scheduled virtual machine is located — S61

Calculate a candidate communication cost required after the to-be-scheduled virtual machine is scheduled in a simulative way to each candidate destination physical machine — S62

Calculate an improvement coefficient according to the candidate communication cost and a current communication cost of the to-be-scheduled virtual machine — S63

Determine a candidate physical machine corresponding to the candidate communication cost as a destination physical machine if the improvement coefficient meets a preset improvement condition — S64

Schedule the to-be-scheduled virtual machine to the destination physical machine — S65

FIG. 6

From the candidate communication costs, select a candidate communication cost currently to be analyzed — S71

Obtain a ratio of the communication cost currently to be analyzed to the current communication cost, and use the ratio as an improvement coefficient corresponding to the communication cost currently to be analyzed — S72

The improvement coefficient is not greater than the preset improvement coefficient — S73

Y

N

Determine that the improvement coefficient meets the preset improvement condition, and determine a candidate destination physical machine corresponding to the improvement coefficient as a destination physical machine — S74

An unanalyzed candidate communication cost exists — S75

N

Y

From the unanalyzed communication costs, select a next unanalyzed candidate communication cost as the communication cost currently to be analyzed — S76

End

FIG. 7

81

First determining
module

82

Communication
cost calculating
module

84

Scheduling
module

83

Second
determining
module

FIG. 8

91

First searching
unit

92

First
determining unit

FIG. 9

101

Second
determining unit

102

Second
determining unit

FIG. 10

111

Improvement coefficient
calculating unit

1111

Current
communication cost
calculating subunit

112

Second
determining unit

FIG. 11

| INTERNATIONAL SEARCH REPORT | International application No. |
|---|---|
| | PCT/CN2011/084933 |

**A. CLASSIFICATION OF SUBJECT MATTER**

G06F 9/50 (2006.01) i

According to International Patent Classification (IPC) or to both national classification and IPC

**B. FIELDS SEARCHED**

Minimum documentation searched (classification system followed by classification symbols)

IPC: H04L; G06F; H04M; H04Q

Documentation searched other than minimum documentation to the extent that such documents are included in the fields searched

Electronic data base consulted during the international search (name of data base and, where practicable, search terms used)

WPI; EPODOC; CNPAT; CNKI: virtual machine, virtual, machin??, resource, load+, bandwidth, schedule+, +mov+, transfer+, cloud, threshold

**C. DOCUMENTS CONSIDERED TO BE RELEVANT**

| Category* | Citation of document, with indication, where appropriate, of the relevant passages | Relevant to claim No. |
|---|---|---|
| X | CN 101504620 A (HUAWEI TECHNOLOGIES CO., LTD.), 12 August 2009 (12.08.2009), description, page 6, line 16 to page 17, line 4, and figures 3-5 | 1-16 |
| A | CN 101719081 A (PEKING UNIVERSITY), 02 June 2010 (02.06.2010), the whole document | 1-16 |
| A | CN 102096601 A (INSPUR (BEIJING) ELECTRONIC INFORMATION INDUSTRY CO., LTD.), 15 June 2011 (15.06.2011), the whole document | 1-16 |
| A | US 2011/0099551 A1 (MCROSOFT CORPORATION), 28 April 2011 (28.04.2011), the whole document | 1-16 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21 August 2012 (21.08.2012) | **18 October 2012 (18.10.2012)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **MIAO, Yu** Telephone No.: (86-10) **62413327** |

Form PCT/ISA/210 (second sheet) (July 2009)

## INTERNATIONAL SEARCH REPORT
Information on patent family members

International application No.

**PCT/CN2011/084933**

| Patent Documents referred in the Report | Publication Date | Patent Family | Publication Date |
|---|---|---|---|
| CN 101504620 A | 12.08.2009 | None | |
| CN 101719081 A | 02.06.2010 | None | |
| CN 102096601 A | 15.06.2011 | None | |
| US 2011/0099551 A1 | 28.04.2011 | None | |

Form PCT/ISA/210 (patent family annex) (July 2009)